# EUROPEAN PATENT SPECIFICATION

(11) **EP 0 706 283 B1**
(45) Date of publication and mention of the grant of the patent: **06.09.2000**
(21) Application number: 94918547.4
(22) Date of filing: 22.06.1994
(51) Int. Cl.: H04N 1/00

(54) **IMAGE PROCESSOR INCLUDING COPYING MACHINE**
BILDPROZESSOR MIT KOPIERER
COPIEUR COMPRENANT UN DISPOSITIF DE TRAITEMENT DE L'IMAGE

(30) Priority: 22.06.1993 JP 17367093
(43) Date of publication of application: 10.04.1996
(73) Proprietor: OMRON CORPORATION, Kyoto-shi, Kyoto 616 (JP)
(72) Inventor: FUJII, Toru, Ukyo-ku, Kyoto-shi Kyoto 616 (JP)
(74) Representative: Kahler, Kurt, Dipl.-Ing.
(86) International application number: JP9400996
(87) International publication number: WO9501043

(56) References cited:
- EP-A- 0 506 469
- JP-A- 2 083 571
- JP-A- 55 123 270
- IBM TECHNICAL DISCLOSURE BULLETIN, vol. 18, no. 6, November 1975, NEW YORK (US), pages 1747-1748, XP002001136 J. L. BACON ET AL.: "Copier security system"
- PATENT ABSTRACTS OF JAPAN vol. 16, no. 497 (E-1279), 14 October 1992 & JP-A-04 183175 (CANON INC), 30 June 1992,

## Description

### Technical Field

This invention relates to an image processing apparatus inclusive of a copier, a facsimile machine, an image reader, etc.

### Background Art

The counterfeiting of securities inclusive of banknotes has become a social problem with the improvements that have been made in the capabilities of full-color copiers. In an attempt to prevent the counterfeiting of banknotes and the like, techniques have been proposed for determining whether a target image to be copied is one whose copying is prohibited and prohibiting faithful reproduction (as by leaving all or part of the image on the paper white or by printing the characters "COPY" over the image) or halting the operation of all or part of the copier if the prohibited image is contained in the target image (see Japanese Patent Application Laid-Open Nos. 60-229572 and 2-210481). Image processing for sensing a prohibited image regardless of the position or angle of a banknote set in a copier also has been proposed (see Japanese Patent Application Laid-Open No. 2-210591).

With these proposed techniques, however, whether or not an image is one whose coping is prohibited is discriminated whenever an attempt to make a copy is performed. With the technique of the type that prohibits faithful reproduction, an abnormal copy is made every time. When an individual attempting illegal counterfeiting tries copying a large number of times, the copying of a banknote will be allowed if a malfunction develops in the image discriminating operation. With the technique of the type that halts operation when an image whose copying is prohibited has been discovered, once the operation of the copier has been halted, even normal copying cannot be performed thereafter.

In JP-A-2-83 571 (abstract) an image copier has a storage of image data which copying is prohibited, input means for entering a copy authority code and judging means for comparing target image and prohibited image and controls the allowance/disallowance of copying based on determination whether copy authority code is legitimate.

In IBM Technical Disclosure Bulletin, vol. 18, no. 6, November 1975, pages 1747-1748 by Bacon et al under "Copier security system" a system is disclosed which system includes a plurality of copiers, a user identification card reader attached to each copier, a microprocessor with associated memory and an output printer. The secure document feature detects whether the document placed in the copier is a sensitive document under security control.

### Disclosure of the Invention

The present invention as set forth in the independent claim 1 makes it possible to subsequently restore operation of an image processing apparatus including a copier (copying machine) once the operation has been halted.

The present invention is adapted to allow mistakes a predetermined number of times, cause the apparatus to operate in an abnormal manner and halt operation only when reading of a prohibited image has been performed in excess of the predetermined number of times.

The present invention prevents unlawful copying not only of banknotes but also of confidential documents.

The present invention makes it possible to copy confidential documents and the like under specific conditions.

In order to facilitate a more detailed understanding of the invention, a case will be described in which the present invention is applied to a copier.

A copier according to the present invention comprises first memory means in which prohibited image data representing an image whose copying is prohibited has been stored in advance; target-image data generating means for reading a target image to be copied and generating target image data representing the target image; judging means for comparing the target image data and the prohibited image data and judging whether the target image contains the prohibited image; control means for prohibiting a copying operation in response to judgment to the effect that the target image contains the prohibited image; input means for entering a prohibition removal code representing authority to remove prohibition of operation; and means for checking to determine whether the entered prohibition removal code is a legitimate code corresponding to the prohibited image contained in the target image; the control means removing the prohibition on operation when it has been determined that the entered prohibition removal code is legitimate.

The prohibited image data representing the image whose copying is prohibited includes data processed so as to be suited to pattern matching. The same is true for image data generated by the generating means.

The prohibition removal code includes not only a code recorded on a code (number) card entered by key input but also data representing the characterizing features of a voice or fingerprint, as well as a physical key.

In accordance with the invention, the operation of the copier once it has been halted is restored by entry of the prohibition removal code. Since the recovery operation is allowed only to an individual having the specific authority, problems such as leakage of confidential information do not arise.

Preferably, there are provided second memory means for storing image data read or generated by the target-image data generating means, and display means for displaying the target image, which is represented by the image data that has been stored in the second memory means, when it has been determined that the entered prohibition removal code is legitimate.

As a result, a target image that is the cause of cessation of operation can be observed and it is possible to check to determine whether the image whose copying is prohibited is being discriminated correctly. If necessary, reference data and parameters for pattern matching can be corrected, thereby making more accurate judgment possible.

In a preferred embodiment, means is provided for counting the number of consecutive times the judging means judges that the target image contains the prohibited image.

The control means performs control in such a manner that abnormal copying is performed until the number of times counted by the counting means attains a predetermined number and, when the predetermined number is attained, prohibits the copying operation and accepts entry of the prohibition removal code from the input means.

Abnormal copying means blackening out a portion which corresponds to a prohibited image, leaving the portion white or printing specific marks such as "COPY" on this portion.

When a prohibited image has been discovered, operation is not halted immediately but abnormal copying is carried out a fixed number of times. In the meantime, therefore, the fact that the user is attempting to copy a prohibited image becomes known and unlawful copying is inhibited, whereupon the copier is restored to the normal state.

The present invention provides an image processing apparatus which, even if an image is one whose copying is prohibited, makes it possible to copy the image providing that the user is an individual possessing the specific authority. This is especially useful for confidential documents.

An image processing apparatus according to this invention comprises first memory means in which prohibited image data representing an image whose copying is prohibited has been stored in advance; target image data generating means for reading a target image to be copied and generating target image data representing the target image; input means for entering a copy authority code that makes possible copying of an image whose copying is prohibited; second memory means for determining whether the copy authority code entered by the input means is legitimate and, if the code is legitimate, for storing this fact or the entered copying authority code; judging means for comparing the target image data and the prohibited image data and judging whether the target image contains the prohibited image; and control means for allowing copying, based upon stored content of the second memory means, when the judging means has judged that the target image contains the prohibited image.

The control means allows copying when the entered copy authority code is judged to be a legitimate code corresponding to the prohibited image contained in the target image.

The control means prohibits the copying operation when the stored content of the second memory means fails to indicate authority to copy the prohibited image contained in the target image.

An image processing apparatus according to the present invention is as follows when defined in general terms: An image processing apparatus which comprises first memory means in which prohibited image data representing a prohibited image has been stored in advance; target image data generating means for reading a target image and generating target image data representing the target image; output means for outputting the target image data generated by the generating means; judging means for judging whether the target image read by the generating means contains the prohibited image; control means for prohibiting operation of at least one of the generating means and output means in response to judgment to the effect that the target image contains the prohibited image; input means for entering a prohibition removal code representing authority to remove prohibition of operation; and means for checking to determine whether the entered prohibition removal code is a legitimate code corresponding to the prohibited image contained in the target image; the control means removing the prohibition on operation when it has been determined that the entered prohibition removal code is legitimate.

The image data includes not only data representing pictures and graphics read by an image sensor but also data representing characters, symbols and codes. Depending upon the particular case, image data and character codes recorded on a recording medium such as a magnetic disk also are included.

The image processing apparatus is a copier, for example. In this case, the output means is copying means for copying the target image on paper.

The image processing apparatus is a facsimile machine, for example. In this case, the output means is means for transmitting image data representing the target image.

The image processing apparatus is an image reader, for example. In this case, the output means is means for storing or sending image data representing the target image.

In a preferred embodiment, the judging means is further provided with means for counting the number of consecutive times the judging means judges that the target image contains the prohibited image.

The control means performs control in such a manner that abnormal output is performed until the number of times counted by the counting means attains a predetermined number of times, prohibits the above-mentioned operation when the predetermined number of times is attained and accepts entry of the prohibition removal code from the input means.

The apparatus can be set to an operable state in advance in such a manner that confidential documents or the like can be handled. An image processing apparatus in accordance with this invention comprises first memory means in which prohibited image data representing a prohibited image has been stored in advance; target image data generating means for reading a target image and generating target image data representing the target image; output means for outputting the target image data generated by the generating means; input means for entering an output authority code that makes output of the prohibited image possible; second memory means for determining whether the output authority code entered by the input means is legitimate and, if the code is legitimate, for storing this fact or the entered authority code; judging means for judging whether the target image read by the generating means contains the prohibited image; and control means for allowing output, based upon stored content of the second memory means, when the judging means has judged that the target image contains the prohibited image.

Other features of the present invention will become more apparent in the description of embodiments with reference being made to the drawings.

### Brief Description of the Drawings

Fig. 1 is a block diagram showing an overview of the electrical configuration of a color copier;
Fig. 2 illustrates the flow of a pattern matching operation;
Figs. 3a through 3c illustrate examples of secrecy marks;
Fig. 4 is a table illustrating the corresponding relationship between images whose copying is prohibited and passwords which make it possible to remove the prohibition on copying;
Fig. 5 is a table illustrating the corresponding relationship between images whose copying is prohibited and passwords which make copying possible;
Figs. 6 and 7 are flowcharts illustrating a first example of the operation of a copier;
Fig. 8 is a flowchart illustrating a second example of the operation of a copier;
Fig. 9 is a flowchart illustrating a third example of the operation of a copier;
Fig. 10 is a flowchart illustrating a fourth example of the operation of a copier;
Figs. 11 and 12 are flowcharts illustrating a fifth example of the operation of a copier;
Fig. 13 is a block diagram showing an overview of the electrical configuration of a facsimile machine; and
Fig. 14 is a block diagram showing an overview of the electrical configuration of an image reader.

An example which is useful for understanding the invention applied to a color copier will be described in detail.

A color copier prohibits the copying of banknotes and confidential documents.

A banknote is not allowed to be copied by anyone. This is referred to as an "absolute copy-prohibition medium". Securities such as stock certificates, bills and checks can be included in such absolute copy-prohibition media.

By contrast, a confidential document can be copied only by specific individuals. This is referred to as a "relative copy-prohibition medium". The authority that makes it possible to copy a relative copy-prohibition medium is bestowed solely upon specific individuals.

As will be illustrated later, the copier halts an operation relating to copying or will not proceed to the copying operation (these are referred to generally as "copying prohibition") when the object (generally paper or a sheet-like entity) (a target object, a body to be copied or an entity having a target image) that is trying to be copied by the copier is judged to be the absolute or relative copy-prohibition medium. The halting of the operation relating to copying takes on various forms, such as halting the operation of a image reader of a target image (operation prohibition), halting the operation of a photosensitive unit, developing unit or transfer unit in the copying process (operation prohibition), and halting the operation of a copy-paper supply mechanism (operation prohibition). In any case, it will suffice to halt (prohibit) (inclusive of power turn-off) the operation of part or all of the copier.

From a state in which operation has been halted or a state in which operation has not progressed to the copying operation, it is necessary to cancel this state and perform the copying operation, restore a state in which copying is possible or return to the initial state (these operations shall be referred to generally as "removal of prohibition").

An individual capable of performing removal of prohibition is decided in advance and such an individual is referred to as an "individual having prohibition removal authority".

An individual having prohibition removal authority with regard to an absolute copy-prohibition medium is referred to as a "specific maintenance man" (e.g., a specific individual from the maker of the copier). Let a rank S represent the authority of the specific maintenance man.

Individuals having prohibition removal authority with regard to a relative copy-prohibition medium are divided into three types in this embodiment. Let a rank A, a rank B and a rank C represent the authorities of these individuals.

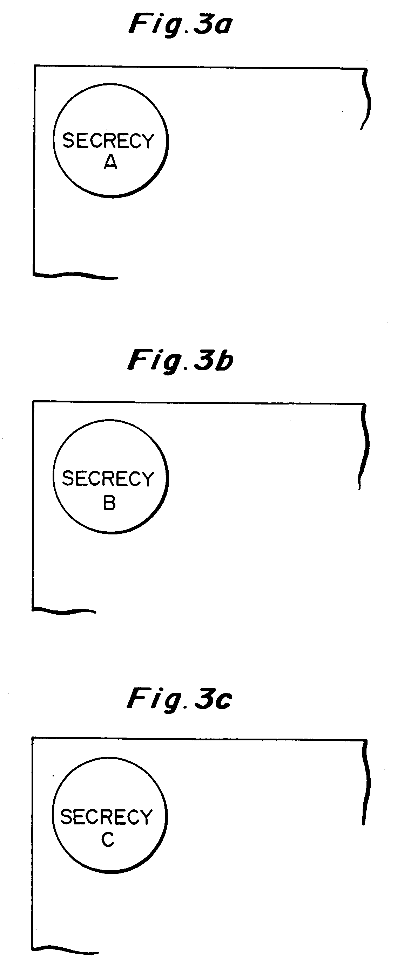

A special mark indicative of a confidential document is printed (inclusive of stamping by a rubber stamp) on an appropriate location of the confidential document (e.g., at a predetermined place such as at the upper left corner, upper right corner or center or at an arbitrary location), as illustrated in Figs. 3a, 3b and 3c. The marks of Figs. 3a, 3b and 3c shall be referred to as "Secrecy A", "Secrecy B" and "Secrecy C".

"Secrecy A" is attached to a document having the highest degree of secrecy. An individual who handles a "Secrecy A" document is one having the authority of rank A (e.g., the director of a corporation). Only this individual can remove the prohibition on copying of a "Secrecy A" document.

"Secrecy B" is attached to a document having the next highest degree of secrecy after "Secrecy A". An individual having the authority of rank A and an individual having the authority of rank B (e.g., the department head of a corporation) can handle a "Secrecy B" document and can remove the prohibition on copying in the copier.

A document having the lowest degree of secrecy has the "Secrecy C" mark attached thereto. This document is handled by individuals having the authorities of rank A, rank B and rank C (the section chief of a corporation is an example of an individual having authority of rank C) and the prohibition on copying may be removed by these individuals.

In order that the copier may identify the individuals having these authorities, a unique password is assigned to each individual. As an example, the password of an individual having the authority of rank S is ssss, and the passwords of individuals having the authorities of ranks A, B and C are aaaa, bbbb and cccc, respectively.

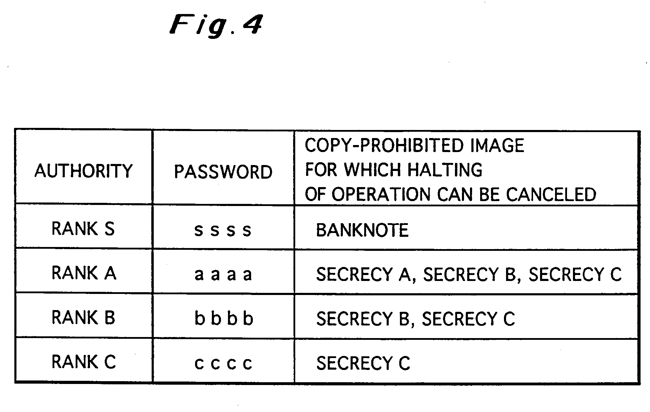

The above-described authorities, passwords and copy-prohibited images for which the copier is released from the halted state are shown collectively in Fig. 4.

Even an individual having the authority of rank S cannot copy a banknote, as mentioned above.

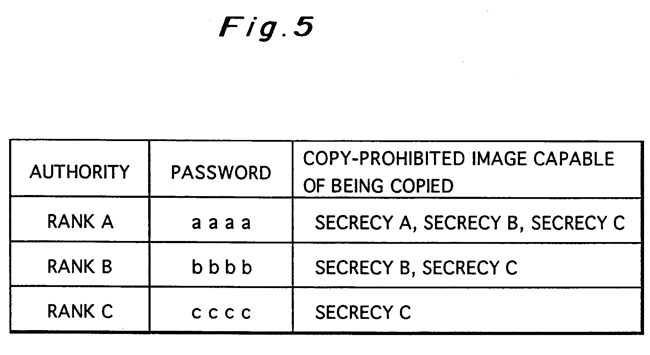

A confidential document can be copied in dependence upon the rank of the given authority. Accordingly, not only is it possible to restart a halted copying operation but it is also possible to give copying permission in advance by the authorities of ranks A - C in such a manner that the copying operation will not be halted. The type of confidential document for which copying permission can be given (this permission is essentially the same as removal of copying prohibition but differs in that it is applied to the copier prior to the copying operation) also differs in dependence upon the authority (ranks A - C). The copying permission authorities, the passwords of the individuals having these authorities and the copy-prohibited images that are capable of being copied are shown collectively in Fig. 5.

In a case where there are a plurality of individuals having authority of the same rank, the same password or different passwords may be assigned to these individuals. What matters is that the rank of authority and the password correspond uniquely.

In this example, it is assumed that the marks "Secrecy A", "Secrecy B" and "Secrecy C" are expressed in the color red. Among the color image data of the colors R (red), G (green) and B (blue) obtained by subjecting these marks to color photography (by reading them using a CCD line sensor), only the color image data R is used for the purpose of applying matching processing to these marks. Moreover, in the color image data R, use is made solely of image data having a level (red-color density) greater than a predetermined threshold value.

By contrast, in matching processing applied to a banknote, use is made of image data of the three primary colors R, G, B each of which has a level intermediate two threshold values of different levels.

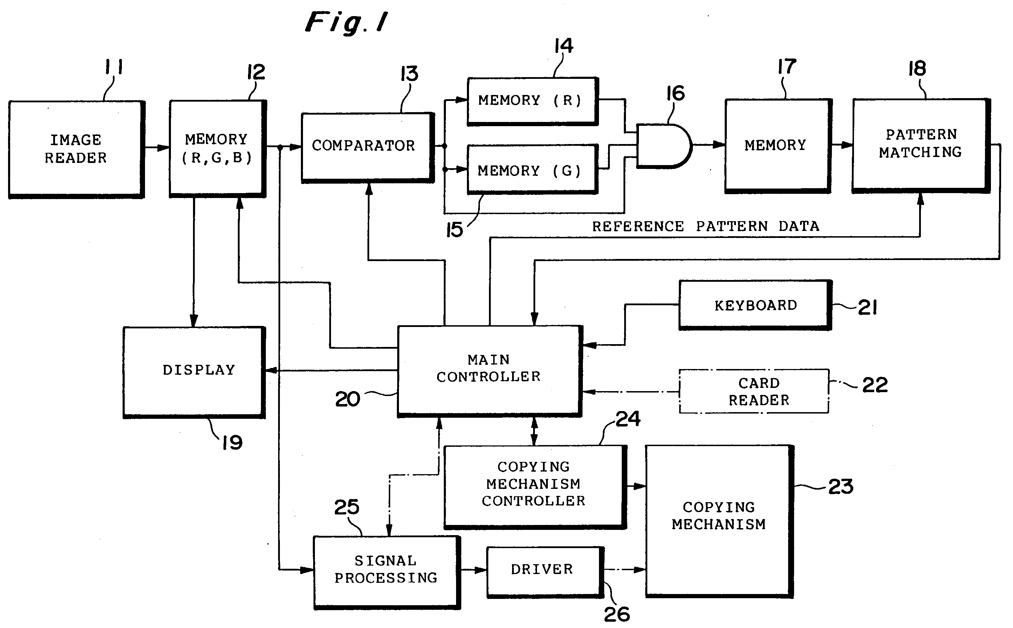

Fig. 1 is a block diagram showing an overview of the electrical configuration of a color copier.

An object of copying (an original, etc.) placed upon or supplied to an original-supporting glass plate (or platen) of the color copier is read by an image reader 11. As well known, the image reader 11 has a signal processing circuit and the like including an R, G, B CCD line sensor, a scanning mechanism and an A/D converter for successively outputting R, G, B image data of the three primary colors representing the image expressed on the object of copying. This color image data is stored temporarily in a memory 12.

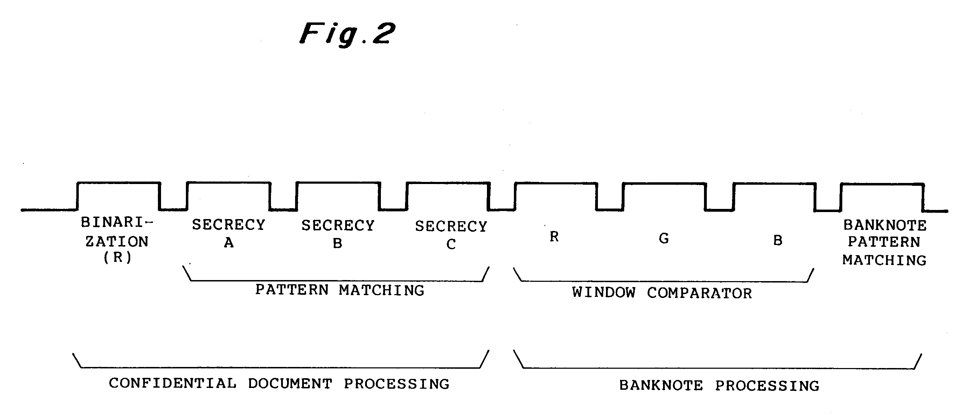

Whether the object of copying is a banknote or confidential document (a document having the mark of Secrecy A, Secrecy B or Secrecy C), which is a medium whose copying is prohibited, is judged based upon the image data that has been stored in the memory 12. The flow of this processing is illustrated in Fig. 2.

First, processing regarding a confidential document is executed. A threshold value for discriminating R-color image data is set in a comparator 13 by a main controller 20 in order to identify a secrecy mark indicative of a confidential document. The R-image data is read out of the memory 12 and is binarized at the threshold value that has been set in the comparator 13.

The main controller 20 controls the overall operation of the copier and is constituted by a CPU, a memory and peripheral devices such as interfaces. The operation of the main controller 20 whenever necessary.

The output image data (target image data) from the comparator 13 is stored in a memory 17 via an AND gate 16.

Each item of reference image data (reference pattern data, prohibited image data) obtained by binarizing R-image data of the marks "Secrecy A", "Secrecy B" and "Secrecy C" at the threshold value set in the comparator 13 is registered in the memory of the main controller 20 beforehand.

A pattern matching circuit 18 successively compares the target image data stored in memory 17 and the reference image data of the marks "Secrecy A", "Secrecy B" and "Secrecy C" registered in the main controller 20 and checks (executes pattern matching processing) to determine whether the compared items of data match or whether the degree of similarity is greater than a predetermined value.

A well-known technique can be used for pattern matching processing. This includes a method of comparing the target image data and reference image data in pixel units or block units of a suitable size and determining the degree of coincidence between them; a method of calculating a cross-correlation value between the target image data and the reference image data; and a method of determining degree of resemblance by fuzzy inference. In all of these methods, a window having a size identical with an area (which is large enough to contain the "Secrecy A" mark) represented by the reference image data is set on the target image data in memory 17 and the window is caused to scan horizontally and vertically. The above-mentioned degree of coincidence, cross-correlation value or degree of resemblance, etc., is obtained at each position of the window and the maximum value obtained is detected. If the maximum value is greater than a predetermined threshold value, then the target image is judged to coincide with (to correspond to) the reference image. It may be so arranged that this judgment is made by the main controller 20. In any case, the result of judgment is applied to the main controller 20 or recognized by the main controller 20. Further, pattern matching is carried out while changing the size and angle of disposition of the target image or reference image (as by an affine transformation) as necessary.

When it is judged that a target image has an image that coincides with any of the three types of secrecy marks, copying of the target image is prohibited, as will be described later.

Next, pattern matching regarding a banknote is executed. First, two different threshold values are set in the comparator 13, which is a window comparator. R-image data read out of the memory 12 is binarized by the comparator 13. For example, image data having a level intermediate the two threshold values is converted to a 1 and all other image data is converted to a 0. The binarized R-image data is stored in a memory 14.

Next, two different threshold values for G are set in the comparator 13. G-image data read out of the memory 12 is binarized by the comparator 13 and stored in a memory 15.

Finally, two different threshold values for B are set in the comparator 13. B-image data is read out of the memory 12 and is successively binarized by the comparator 13. In sync with the reading of the B-image data from memory 12, the items of binary R-image data and G-image data are read successively out of the memories 14 and 15. Accordingly, the items of binarized R-, G- and B-image data representing corresponding pixels (identical pixels or pixels very close together) are applied to an AND gate 16 simultaneously, which takes the AND of these items of data. The result of the AND operation is stored in a memory 17.

Meanwhile, reference image data (reference pattern data) (of which there are a plurality of types when banknotes are of a plurality of types) obtained by applying window-comparator processing and AND processing the same as that described above to R-, G- and B-image data representing an image which is a specific part (e.g., a stamped pattern, a portrait pattern, etc.) or all of the banknote is registered in the main controller 20 in advance.

The pattern matching circuit 18 matches the image data stored in the memory 17 and the reference image data (of a plurality of types) in the same manner as in the case of the secrecy marks and judges whether there is matching with any of the reference image data.

The matching processing relating to confidential documents and the matching processing relating to banknotes may be executed in an order which is the reverse of the foregoing. If the capacity of the memory 17 is large, an arrangement may be adopted in which image data obtained by binarization processing for detecting the secrecy marks of the target image data is stored in the memory 17, after which binarization processing for detecting a banknote is performed followed by application of pattern matching processing. If two comparators are provided, the processing for detecting the secrecy marks and the binarization processing for detecting a banknote can be performed simultaneously. If four comparators are provided, all of the binarization processing can be executed at the same time. The threshold values for binarization of the R-, G- and B-image data may be the same or different. It is also permissible to use solely image data of a specific color in the matching of banknote images as well. There are various methods for the purpose of pattern matching in addition to the binarization processing described above, such as a method of effecting a conversion to dither image data. In case of a banknote, an arrangement may be adopted in which matching processing is performed by making joint use of features other than those of image data, such as by sensing magnetism.

The copier is provided with a keyboard 21 connected to the main controller 20. The keyboard 21 is used to make various entries (start of copying, number of copies, whether sorting is necessary or not, magnification, clearing, etc.) for the purpose of operating the copier, and to allow entry of a password by an individual possessing the authority to remove the prohibition on copying. Checking to determine whether an individual has the authority to remove the prohibition on copying is carried out based upon the entered password.

An ID code of an individual possessing the authority to remove the prohibition on copying may be recorded on a card (a magnetic card, optical card or IC card). A card reader 22 is provided in such case, as indicated by the dashed line. The card data read by the card reader 22 is applied to the main controller 20.

Checking to determine whether an individual is one possessing the authority to remove the prohibition on copying can be performed utilizing matching of finger prints, voice matching or a key (a mechanical or magnetic key). This is in addition to the keying in of a password (ID code) and the reading of a card on which an ID code has been recorded.

A display unit (a liquid-crystal display device, for example) 19 is used in a display for the purpose of user recognition of the image stored in the memory 12 as well as the purpose of displaying various information and warnings to the user of the copier.

The color copier is further provided with mechanical elements (a copying mechanism and the like) which execute color copying. These elements may be those that are well known. At the time of the copying operation, the R-, G-, B-image data that has been stored in the memory 12 is applied to a signal processing circuit 25 and is converted to image data of the colors magenta (M), cyan (C), yellow (Y) and black (BK). A semiconductor laser is driven by a driver 26 in accordance with the image data resulting from the conversion, and an image is formed on a photosensitive drum within a copying mechanism 23. The copying mechanism 27 includes a developing unit, a transfer unit a paper feeding device, etc. The copying mechanism 23 is controlled by a controller 24. The main controller 20 and the controller 24 for the copying mechanism communicate with each other. The controller 24 for the copying mechanism executes a copying operation only if allowed by main controller 20. An arrangement may be adopted in which the signal processing circuit 25 or the driver 26 perform an operation for copying only if allowed by the main controller 20.

A memory in the main controller 20 is provided with the table correlating (linking) the passwords and the copy-prohibited images (reference image data) for which the halting of operation can be canceled by the corresponding passwords, as shown in Fig. 4. The table correlating the passwords and the copy-prohibited images whose copying can be allowed by the corresponding passwords is provided in the memory of the main controller 20, if necessary.

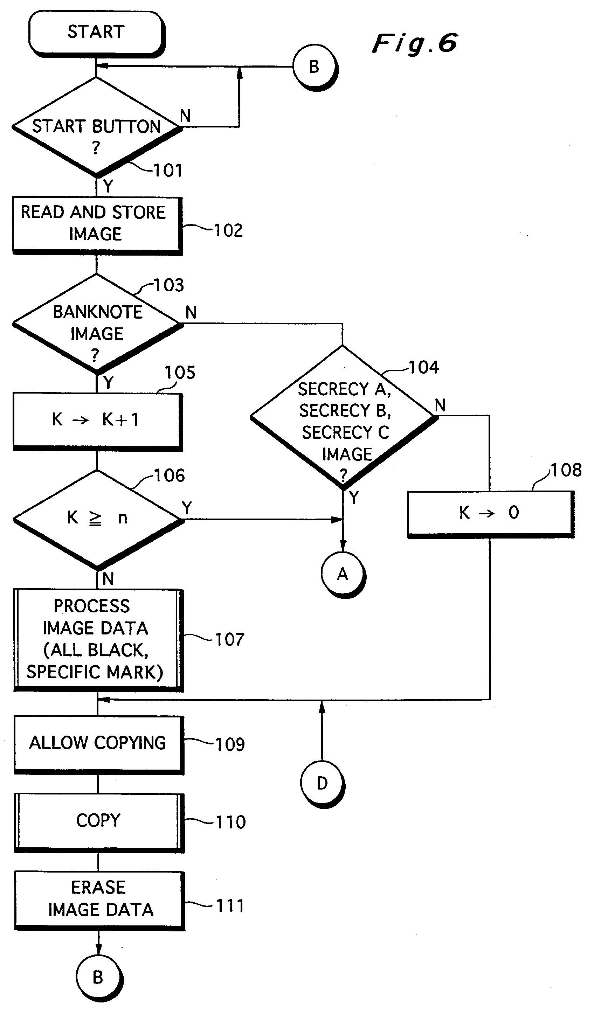

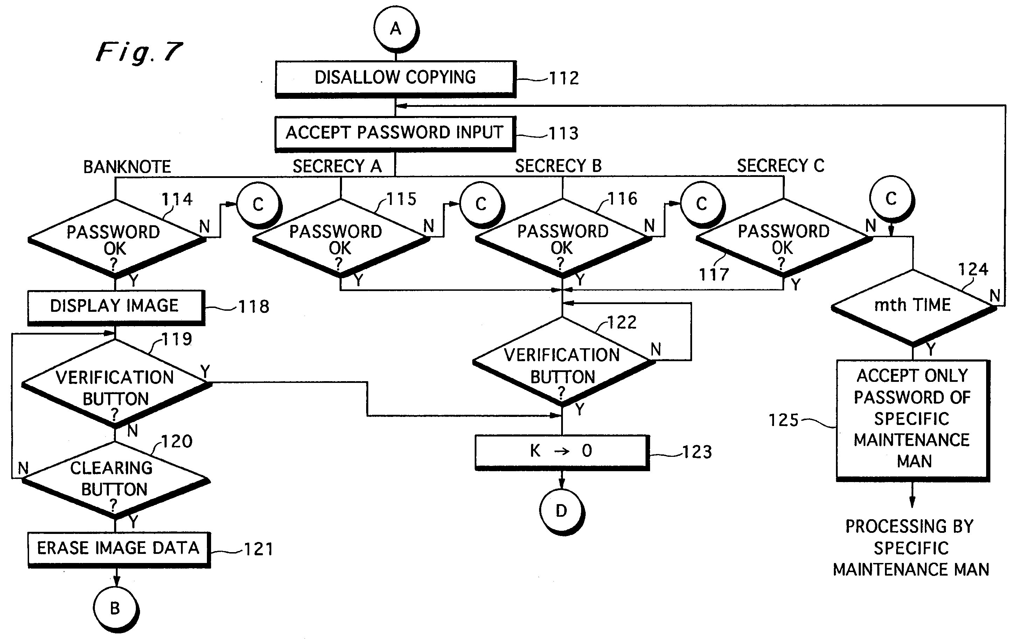

Figs. 6 and 7 show an example of processing relating to coping prohibition and removal of this prohibition in a copier. This processing is executed by the main controller 20.

This example is one in which, when an object to be copied (the object of copying) is judged to be a banknote, the sheet of paper outputted is printed on in all black in a size corresponding to the size of the banknote at a position corresponding to the position at which the banknote has been placed on the original-supporting glass plate, or the sheet of paper outputted has the image of the banknote transferred thereto with a specific mark (large characters reading "COPY", for instance) printed over the image. This processing is repeated a prescribed plurality of times [assumed to be (n-1) times] so long as copying of the banknote continues being tried. When copying of the banknote is tried the nth time, the copier stops operating. When the original is judged to be a document which contains the secrecy mark ("Secrecy A", "Secrecy B", "Secrecy C"), operation of the copier ceases immediately.

The user places the object of copying on the original-supporting glass plate or sets it in an auto-feeding mechanism and presses a start button on the keyboard 21 (step 101). When this is done, the image represented on the object of copying placed on the glass plate is read by the image reader 11 and the data representing this image is stored in the memory 12 (step 102), as described above.

Thereafter, pattern matching between the target image and the reference images is carried out in the manner described above.

If the target image does not agree with any of the reference images ("NO" at each of steps 103, 104), this means that the target image does not contain an image whose copying is prohibited and, hence, the copying operation is performed in the usual manner.

More specifically, a counter k for counting the number of times unlawful copying of the banknote is tried is cleared (step 108) and the main controller 20 provides the controller 24 for the copying mechanism with permission for copying (step 109). The image data that has been stored in the memory 12 is processed by the signal processing circuit 25, the semiconductor laser is driven in accordance with the processed data in the manner described above, and the image represented by the image data is printed on paper by the copying mechanism 23 (step 110). Thereafter, the image data in the memory 12 is cleared (step 111) to return to the initial state. This is the ordinary operation.

If it is judged that the target image contains the image of a banknote ("YES" at step 103), the counter k is incremented (step 105) and it is determined whether the value in the counter k after updating has attained the value n (step 106).

If the value of the count in the counter k has not attained the value n ("NO" at step 106), the image data in the memory 12 is processed. The pattern matching circuit 18 detects the position of the window for which the degree of coincidence, the correlation value or the degree of resemblance between the target image and the reference image (the image of the banknote) indicates the maximum value and applies the data representing this position to the main controller 20. The main controller 20 writes image data representing the color black in the memory 12 over an area that corresponds to the size of the banknote designated by an address represented by the data of the above-mentioned position. Alternatively, the main controller writes image data representing a specific mark in the area in which the image data of the banknote resides in memory 12 (step 107).

Thereafter, copying is allowed and the image represented by the image data that has been stored in memory 12 is printed on paper (steps 109, 110). Accordingly, paper on which the area in which the banknote is present is blackened or paper on which a specific mark is printed over the image of the banknote is outputted. The memory 12 is cleared (step 111) and the initial state is restored. The printing in all black can be achieved also by controlling the semiconductor laser when a black image is formed on the photosensitive drum by the semiconductor laser. At this time it is preferred that a warning indication be presented on the display unit 19 so that copying of the banknote will not be carried out.

The operation of steps 103 ∼ 107, 109 ∼ 111 is repeated as long as copying of the banknote continues being tried. If this unlawful action reaches an nth time (YES at step 106), then copying is not allowed (step 112).

More specifically, the main controller 20 notifies the controller 24 for the copying mechanism of the fact that copying is not allowed and the copying mechanism 23 ceases operating. The main controller 20 preferably notifies also the image reader 11 and keyboard 21 of the fact that copying is not allowed. As a result, the image reader 11 ceases operating. In addition, inputs relating copying, such as pressing of the start button on the keyboard 21, are ignored.

Copying is not allowed (step 112) also when it has been judged that the target image contains a secrecy mark (YES at step 104). The fact that copying is not allowed preferably is stored by turning on a disallowance flag within the main controller 20.

When copying is disallowed, the main controller 20 causes the display unit 19 to display the fact that a password is to be entered and waits for entry of the password (step 113). Preferably, the cause of cessation of operation of the copier also is displayed on the display unit 19. For example, it is preferred that a display reading "You are trying to copy a banknote. Please call a specific maintenance man." or "You are trying to copy a confidential document. Please call a person having the authority." be presented.

When an individual having authority with regard to removal of prohibition of copying enters the password from the keyboard 21, it is determined whether the password corresponds to the copy-prohibited image that is the cause of cessation of operation (steps 114 ∼ 117).

For example, in a case where operation of the copier has been halted in response to an attempt to copy a banknote, a "YES" decision is rendered at step 114 only if the password ssss is entered. When operation has been halted in response to the secrecy mark "Secrecy B" being contained in the target image, a "YES" decision is rendered at step 116 only if the password aaaa or bbbb is entered.

The keys for entering the password may be provided within the copier and need not be on the keyboard 21 having the keys which the operator uses to operate the copier. A verify button and a clear button are also provided on the keyboard 21 or in the copier.

When it has been judged that the image of the banknote is contained in the target image and, moreover, the password ssss of the individual of rank S (the specific maintenance man) has been entered ("YES" at step 114), the image data that has been stored in the memory 12 is applied to the display unit 19 and the target image is displayed (step 118).

The specific maintenance man observes the image displayed on the display unit 19 and judges whether the image is that of a banknote. Upon determining with certainty that the image is that of a banknote, the specific maintenance man presses the clear button (step 120). In response to the input from the clear button, the image data in memory 12 is cleared (step 121) and the initial state is restored. More specifically, disallowance of copying is canceled (the disallowance flag is turned off) and copying is allowed. In a case where disallowance of copying has been applied to the image reader 11 and keyboard 21, the copying disallowance command is canceled. In order to remove the prohibition on copying, it is not necessarily required that the clear button be pressed. Disallowance of copying may be canceled immediately in response to determination of the fact that the entered password is OK.

When the specific maintenance man observes the target image displayed on the display unit 19 and judges that the image is not that of the banknote, this means that the judgment based upon pattern matching is erroneous. The specific maintenance man presses the verify button (step 119). The counter k is cleared (step 123) in response, processing proceeds to step 109, the fact that copying is allowed is outputted from the main controller 20 and copying of the image represented by the image data stored in the memory 12 is carried out (steps 109 ∼ 111).

Thus, when an image that is not a banknote has been judged to be a banknote, this means that the reference image data of the banknote contains an error or that the threshold value for the purpose of discriminating degree of coincidence, correlation value or degree of resemblance contains an error. Inspection by the specific maintenance man and revision of data or parameters are necessary.

The display of the image at step 118 is useful in judging whether pattern matching is being conducted properly. However, display of this image need not necessarily be presented.

After it is judged that the target image contains a secrecy mark and the pre-registered password is entered by reason of the fact that cessation of operation arising from this secrecy mark can be canceled (step 115, 116 or 117), the verify button 122 is pressed by the individual having authority (step 122). When this is done, prohibition of copying is removed. That is, the counter k is cleared (step 123), processing proceeds to step 109 and the image represented by the image data stored in the memory 12 is copied (steps 109 ∼ 111). The disallowance flag is turned off as well. Since the document bearing the secrecy mark is being copied by an individual having the authority, no problems arise.

In this case also, an arrangement may be adopted in which the image represented by the image data stored in the memory 12 is displayed on the display unit 19. Further, the prohibition on copying may be removed immediately in response to verification of the password without requiring depression of the verify button.

Re-entry of the password is permitted a suitable number of times [e.g., twice, where this is assumed to be (m-1) times]. However, in a case where it is judged that the copy-prohibited image that is the cause of cessation of operation cannot be dealt with even if the password has been entered m-number of times ("YES" at step 124), operation is entrusted to processing implemented by the specific maintenance man (step 125). At this time an alert may be issued. As a consequence, the main controller 20 will accept only the password of the specific maintenance man. The maintenance man implements the operation for removing the prohibition on copying and the processing of steps 118 ∼ 121.

In this example, copying is allowed to be tried (n-1) times in case of a banknote. However, an arrangement may be adopted in which copying is disallowed immediately (step 112) when a banknote is determined to be present, in the same manner as when a secrecy mark is present.

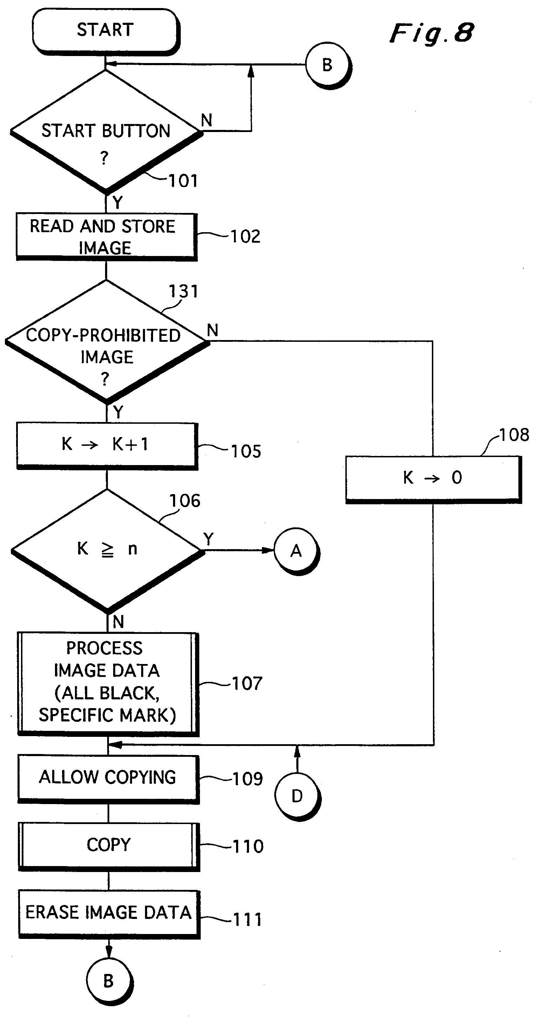

In Fig. 8, a copying operation is allowed (n-1) times, without immediate prohibition of copying, also in a case where a secrecy mark is determined to be present. The image copied is blackened or provided with a specific mark in this case as well.

When an image whose copying is prohibited is determined to be present by the pattern matching circuit 18 (step 131), the program proceeds to step 105. Otherwise, an ordinary copying operation is carried out. Other processing is the same as that shown in Figs. 6 and 7.

In Fig. 6, an abnormal copying operation is performed consecutively (n-1) times and copying is prohibited the nth time if only the original is a banknote, even if it is not the same banknote. Similarly, in Fig. 8, an abnormal copying operation is performed consecutively (n-1) times and copying is subsequently prohibited if the original is a copy-prohibited image, even if it is not the same copy-prohibited image.

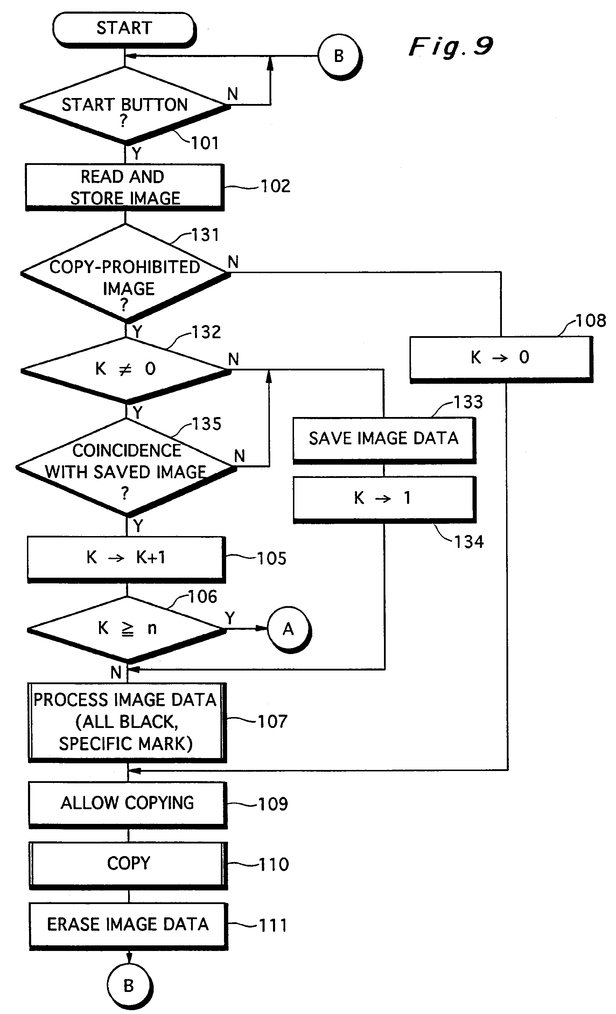

In the example shown in Fig. 9, an abnormal copying operation is performed (n-1) times and copying is prohibited the nth time in case of a copy-prohibited image identical with the immediately preceding image. One other memory is provided in order to save the immediately preceding copy-prohibited image.

When a copy-prohibited image is judged to be present ("YES" at step 131) and this is the first time ("NO" at step 132), the image data of memory 12 or memory 17 is saved in the other memory (step 133) and the counter k is set to 1 (step 134). If this is not the first time ("YES" at step 132), the counter k is incremented (step 105) in a case where the saved image and the image just read are the same (the degree of coincidence, the correlation value or the degree of resemblance is greater than the threshold value) (this matching also is performed by the pattern matching circuit 18). If the two images differ, the current image is saved and the counter k is set to 1 (steps 133, 134).

This flowchart is the same as Figs. 6 and 7 or Fig. 8 in other aspects. It may be so arranged that the abnormal copying operation is allowed (n-1) times and copying prohibited the nth time only in a case where the banknote is the same banknote.

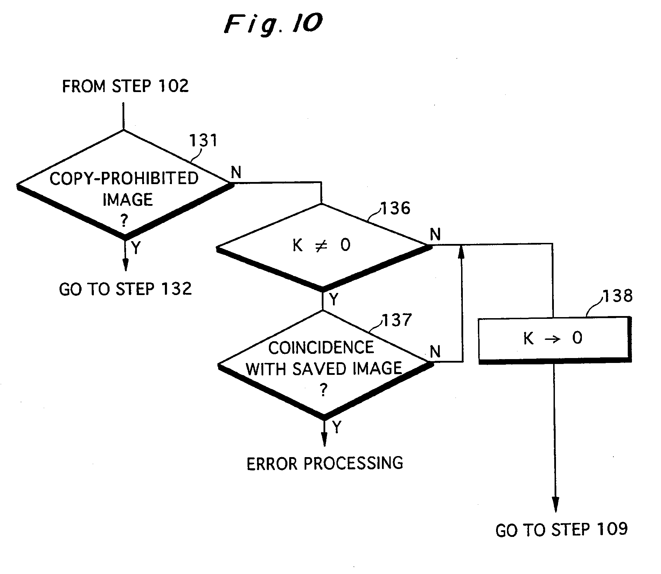

Fig. 10 illustrates a case in which, after a copy-prohibited image has been copied inadvertently (thus producing an abnormal copy), the user notices the fact and then verifies that an attempt is being made to copy a target image that may be copied lawfully, namely an image that is not prohibited from being copied.

Fig. 10 illustrates only steps different from those of the processing in Fig. 9. After copying of a copy-prohibited image has been attempted (k≠0; "YES" at step 136), a transition is made to a normal copying operation only in a case where a lawfully copied image currently about to be copied ("NO" at step 131) does not agree with the preceding image that has been saved ("NO" at step 137).

Since the current image is not the copy-prohibited image ("NO" at step 131), an error results if the current image data and the immediately preceding image data coincide ("YES" at step 137). This means that it is necessary for the specific maintenance man to revise the parameters or the like.

The approach of the example shown in Fig. 10 is applicable to Figs. 6 through 8 as well. In such case, steps 132, 133, 134 of Fig. 9 need only be added to Fig. 6 or Fig. 8.

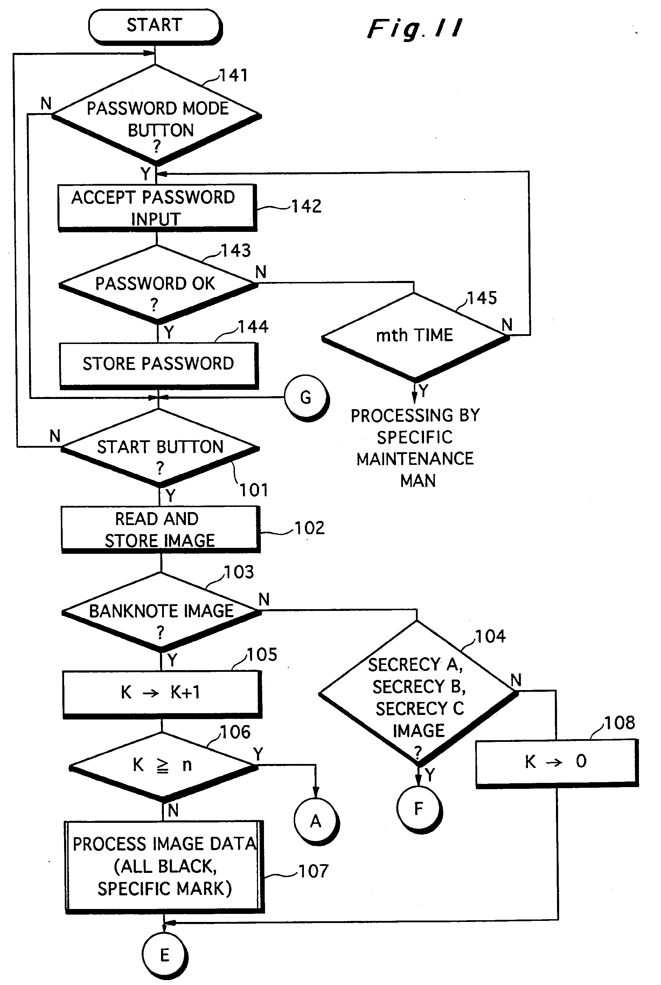

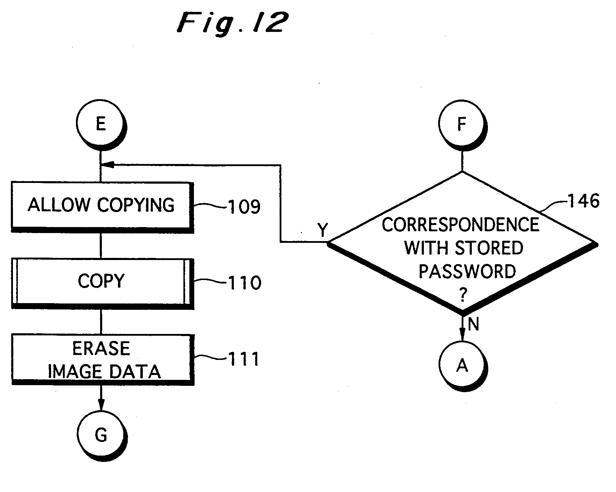

An example shown in Figs. 11 and 12 relates to a case in which an individual having authority to copy a confidential document copies the confidential document for which such permission has been given to this individual, this case being so adapted that entry of the password is allowed prior to the copying operation. The correspondence table shown in Fig. 5 is used (though the table of Fig. 4 can be used instead of the table of Fig. 5). Since a banknote is a medium whose copying is absolutely prohibited, this operation is not allowed. Accordingly, the processing relating to a banknote (steps 101 ∼ 107, 109 ∼ 111, steps 112 ∼ 114, 118 ∼ 121, 123) is identical with that shown in Figs. 6 and 7.

The keyboard 21 of the copier is provided with a password mode button (or "secrecy" button). The authorized individual presses this button (step 141) and then keys in the password (step 142).

If the entered keyword coincides with any password registered in the table of Fig. 5, this means that this password is OK (step 143). A password verified as being proper is stored in the memory of the main controller 20 (step 144). Entry of the password is allowed m times (step 145).

The authorized individual may thenceforth use the copier in the usual manner.

A password may be entered in linkage with the secrecy mark ("Secrecy A") and stored in linkage with this secrecy mark.

In a case where the target image read by the image reader 11 contains a secrecy mark ("YES" at step 104), a check is made to determine whether the password stored at step 144 corresponds to the secrecy mark contained in the target image (step 146). In a case where the entered password is that of an individual having the authority to copy the secrecy mark contained in the target image, copying is allowed (step 109) and normal copying takes place (steps 110, 111). In other cases (inclusive of a case where a password has not been entered), copying is not allowed (Fig. 7, step 112). Processing for the case where copying is not allowed is as illustrated in Fig. 7.

This invention is applicable to a facsimile machine, an image scanner and other image processing apparatus.

In a facsimile machine, the above-mentioned medium whose copying is prohibited need only be replaced by a medium whose transmission is prohibited. A prohibition on copying (halting of the copying operation) is replaced by a prohibition on transmission (halting of the transmitting operation) in a facsimile machine, removal of the prohibition on copying is replaced by removal of the prohibition on transmission, disallowance of copying is replaced by disallowance of transmission, and allowance of copying is replaced by allowance of transmission.

An image scanner performs an operation such as the transmission of read image data to a personal computer or the like via a transmission line or the storage of the image data in a memory (semiconductor memory, magnetic disk, etc.) and these operations therefore correspond to the copying operations in a copier. Accordingly, the transmission and storage operations are prohibited and these prohibitions are removed in dependence upon keying in of the proper password.

If, in a case where an image has been stored as image data on a recording medium rather than being represented visually on paper or a sheet-like object, this image data is data whose electronic copying is prohibited or data whose transmission or output is prohibited, specific data (secrecy code data) indicative of this fact is recorded on the recording medium. The processing apparatus which handles such a recording medium prohibits electronic copying, transmission or output when the specific data is detected and cancels the prohibition in response to entry of a password having the authorization to remove the prohibition.

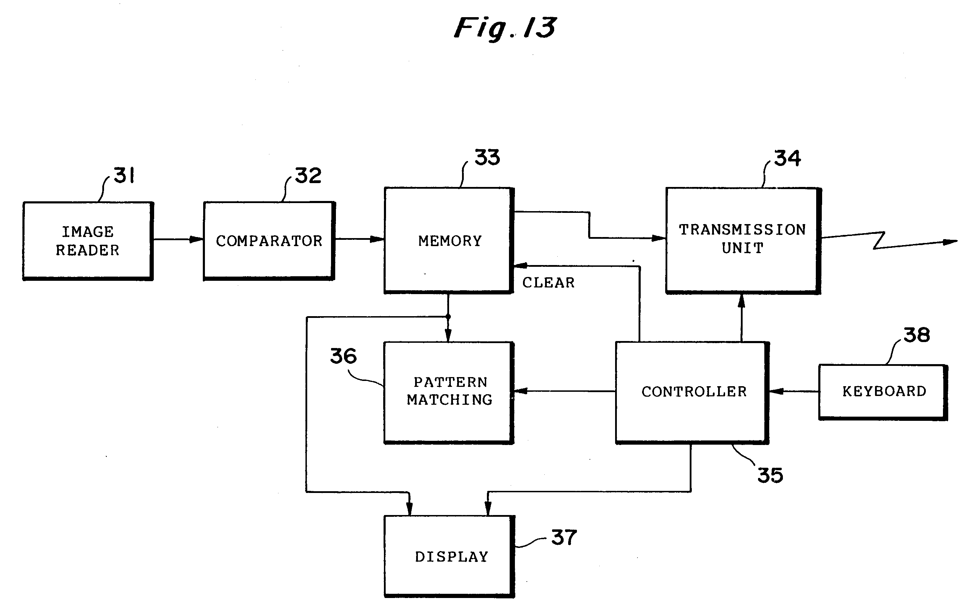

Fig. 13 illustrates the general electrical configuration of a facsimile machine.

Information (characters, image information) on a medium (paper or the like) on which information to be transmitted is represented is read by an image reader (inclusive of a CCD line sensor) 31, the information is binarized by a comparator 32 and the binarized information is stored temporarily in a memory 33. The image data in the memory 33 and predetermined transmission-prohibit image data undergo matching in a pattern matching circuit 36. In case of non-coincidence, transmission is allowed by a controller 35 and the image data in memory 33 is transmitted from a transmission unit 34 to other equipment. If coincidence is achieved, transmission is prohibited by the controller 35. When the password of an individual having the authority to allow transmission is entered from a keyboard 38, the prohibition on transmission is removed by the controller 35 and the image data in memory 33 is transmitted from the transmission unit 34. A display unit 37 displays information for manipulating the facsimile machine and relating to operation and, as necessary, displays an image whose transmission has been prohibited. More detailed processing is the same as that executed in the copier described above. Image data that has been transmitted or image data in the memory 33 is cleared as necessary.

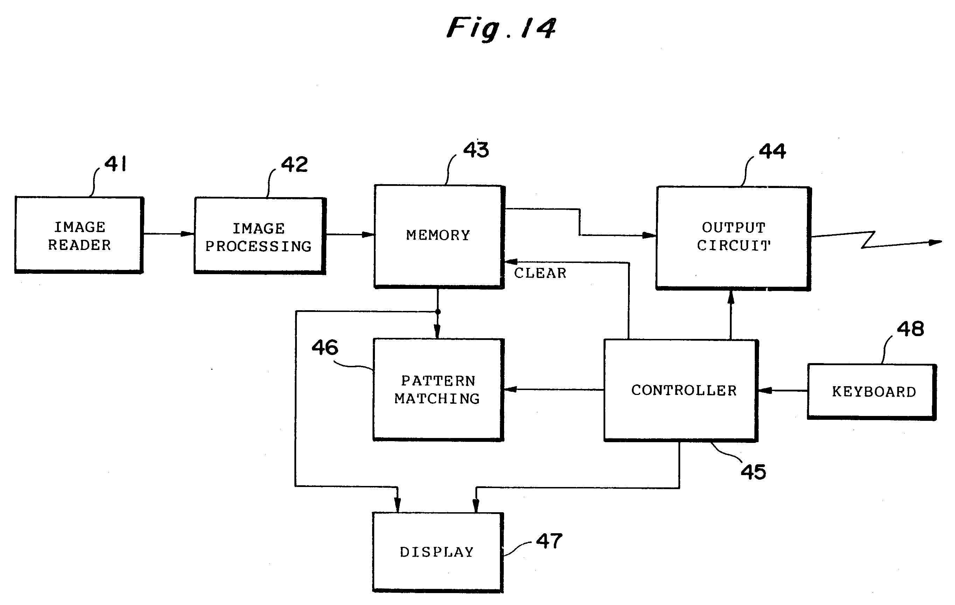

Fig. 14 illustrates the general electrical configuration of an image reader.

Image data obtained by reading in an image reader 41 is stored in a memory 43 upon being subjected to gamma correction, brightness adjustment and, if necessary, processing such as binarization in an image processing unit 42. The image data in the memory 43 and predetermined output-prohibit image data undergo matching in a pattern matching circuit 46. In case of non-coincidence, output is allowed by a controller 45, the image data is outputted from an output circuit 44 and the outputted data is transmitted to a computer or storage medium. In case of coincidence, output is prohibited by the controller 45. When the password of an individual having the authority to allow output is entered from a keyboard 48, the prohibition on output is removed and the image data in memory 43 is outputted from the output circuit 44. A display unit 47 displays information for manipulating the image reader, information relating to operation and, as necessary, displays an image whose output has been prohibited. The image data in memory 43 is cleared after being outputted or when output has been prohibited. More detailed operation is the same as that performed in the copier.

## Claims

1. An image processing apparatus comprising:
first memory means (20, 35, 45) in which prohibited image data representing a prohibited image has been stored in advance;
target-image data generating means (11, 31, 41) for reading a target image and generating target image data representing the target image;
output means (23, 34, 44) for outputting the target image data generated by said generating means;
judging means (18, 36, 46) for judging whether the target image read by said generating means (11, 31, 41) contains the prohibited image;
first input means (21, 22, 38, 48) for entering a prohibition removal code representing authority to remove prohibition on operation;
means (20, 35, 45) for counting a number of consecutive times said judging means (18, 36, 46) judges that the target image contains the prohibited image;
control means (20, 35, 45) for performing control in such a manner that abnormal output is performed until the number of times counted by said counting means attains a predetermined number of times, and when the predetermined number of times is attained, prohibiting operation of at least one of said generating means (11, 31, 41) and said output means and accepting entry of the prohibition removal code from said first input means (21, 22, 38, 48); and
means (20, 35, 45) for checking to determine whether the entered prohibition removal code is a legitimate code corresponding to the prohibited image contained in the target image;
wherein said control means (20, 35, 45) removes the prohibition on operation when it has been determined that the entered prohibition removal code is legitimate.

2. An image processing apparatus according to claim 1, wherein said control means (20, 35, 45) performs control in such a manner that normal output is restored when said judging means (18, 36, 46) judges that the target image does not contain the prohibited image by the time that the number of times counted by said counting means (20, 35, 45) attains the predetermined number of times.

3. An image processing apparatus according to claim 1, wherein said control means (20, 35, 45) performs control in such a manner that normal output is restored when, after said judging means (18, 36, 46) judges that the target image contains the prohibited image, it is judged that the target image read by said generating means (11, 31, 41) does not contain the prohibited image and, moreover, it is judged that the target image read by said generating means is different from a preceding target image judged to contain the prohibited image.

4. An image processing apparatus according to claim 1, wherein when said counting means (20, 35, 45) detects that said judging means (18, 36, 46) has judged consecutively, said predetermined number of times, that an identical target image contains the prohibited image.

5. An image processing apparatus according to any one of claims 1 to 4, wherein when said prohibited image is an image which is part or all of a banknote.

6. An image processing apparatus according to claim 1, further comprising:
second input means (21, 22, 38, 48) for entering an output authority code that makes possible output of the prohibited image; and
second memory means (20, 35, 45) for determining whether the output authority code entered by said second input mean is legitimate and, if the code is legitimate, for storing this fact or the entered output authority code;
said control means (20, 35, 45) allowing output, based upon stored content of said second memory means, when said judging means (18, 36, 46) has judged that the target image contains the prohibited image.

7. An image processing apparatus according to claim 6, wherein said control means allows output when it has been determined that the entered authority code is a legitimate code corresponding to the prohibited image contained in the target image.

8. An image processing apparatus according to claim 6 or 7, wherein said prohibited image is a mark indicative of a confidential document.

9. An image processing apparatus according to any one of claims 6 to 8, wherein said prohibition removal code and said authority code are identical in regard to an identical prohibited image.

10. An image processing apparatus according to any one of claims 6 to 9, wherein said first input means and said second input means are the same.

11. An image processing apparatus according to claim 1, wherein said apparatus is a copier and said output means is copying means (23) for copying the target image on paper.

12. An image processing apparatus according to claim 1, wherein said apparatus is a facsimile machine and said output means (23, 34, 44) is means (34) for transmitting image data representing the target image.

13. An image processing apparatus according to claim 1, wherein said apparatus is an image reader and said output means is means (44) for storing or sending image data representing the target image.

## Patentansprüche

1. Bildverarbeitungsvorrichtung, umfassend:
ein erstes Speichermittel (20, 35, 45), in dem verbotene Bilddaten, die ein verbotenes Bild darstellen, im voraus gespeichert wurden;
ein Zielbilddaten-Erzeugungsmittel (11, 31, 41) zum Lesen eines Zielbildes und zum Erzeugen von Zielbilddaten, die das Zielbild darstellen;
ein Ausgabemittel (23, 34, 44) zum Ausgeben der von dem Erzeugungsmittel erzeugten Zielbilddaten;
ein Beurteilungsmittel (18, 36, 45) zum Beurteilen, ob das von dem Erzeugungsmittel (11, 31, 41) gelesene Zielbild das verbotene Bild enthält;
ein erstes Eingabemittel (21, 22, 38, 48) zum Eingeben eines Verbotsaufhebungscodes, der eine Berechtigung zum Aufheben des Verbots beim Betrieb darstellt;
ein Mittel (20, 35, 45) zum Zählen einer Anzahl von aufeinanderfolgenden Malen, zu denen das Beurteilungsmittel (18, 36, 46) beurteilt, daß das Zielbild das verbotene Bild enthält;
ein Steuermittel (20, 35, 45) zum Durchführen einer Steuerung in einer derartigen Weise, daß eine anormale Ausgabe durchgeführt wird, bis die Anzahl der Malen, die von dem Zählmittel gezählt werden, eine vorbestimmte Anzahl von Malen erreicht, und, wenn die vorbestimmte Anzahl von Malen erreicht ist, zum Verbieten einer Operation von zumindest einem des Erzeugungsmittels (11, 31, 41) und des Ausgabemittels und zum Annehmen der Eingabe des Verbotsaufhebungscodes von dem ersten Eingabemittel (21, 22, 38, 48); und
ein Mittel (20, 35, 45) zum Prüfen, um festzustellen, ob der eingegebene Verbotsaufhebungscode ein rechtmäßiger Code ist, der dem verbotenen Bild entspricht, das in dem Zielbild enthalten ist;
wobei das Steuermittel (20, 35, 45) das Verbot beim Betrieb aufhebt, wenn festgestellt wurde, daß der eingegebene Verbotsaufhebungscode rechtmäßig ist.

2. Bildverarbeitungsvorrichtung nach Anspruch 1, wobei das Steuermittel (20, 35, 45) die Steuerung in einer derartigen Weise ausführt, daß eine normale Ausgabe wiederhergestellt wird, wenn das Beurteilungsmittel (18, 36, 46) beurteilt, daß das Zielbild nicht das verbotene Bild enthält, bis die Anzahl von Malen, die durch das Zählmittel (20, 35, 45) gezählt werden, die vorbestimmte Anzahl von Malen erreicht.

3. Bildverarbeitungsvorrichtung nach Anspruch 1, wobei das Steuermittel (20, 35, 45) die Steuerung in einer derartigen Weise ausführt, daß eine normale Ausgabe wiederhergestellt wird, wenn, nachdem das Beurteilungsmittel (18, 36, 46) beurteilt, daß das Zielbild das verbotene Bild enthält, beurteilt wird, daß das von dem Erzeugungsmittel (11, 31, 41) gelesene Zielbild nicht das verbotene Bild enthält, und überdies beurteilt wird, daß das von dem Erzeugungsmittel gelesene Zielbild von einem vorangehenden Zielbild, von dem beurteilt wurde, daß es das verbotene Bild enthält, verschieden ist.

4. Bildverarbeitungsvorrichtung nach Anspruch 1, wobei das Zählmittel (20, 35, 45) erkennt, daß das Beurteilungsmittel (18, 36, 46) fortlaufend zu der vorbestimmten Anzahl von Malen beurteilt hat, daß ein identisches Zielbild das verbotene Bild enthält.

5. Bildverarbeitungsvorrichtung nach einem der Ansprüche 1 bis 4, wobei das verbotene Bild ein Bild ist, das ein Teil einer oder eine ganze Banknote ist.

6. Bildverarbeitungsvorrichtung nach Anspruch 1, welche ferner umfaßt:
ein zweites Eingabemittel (21, 22, 38, 48) zum Eingeben eines Ausgabeberechtigungscodes, der die Ausgabe des verbotenen Bildes möglich macht; und
ein zweites Speichermittel (20, 35, 45) zum Feststellen, ob der von dem zweiten Eingabemittel eingegebene Ausgabeberechtigungscode rechtmäßig ist, und, wenn der Code rechtmäßig ist, zum Speichern dieser Tatsache oder des eingegebenen Ausgabeberechtigungscodes;
wobei das Steuermittel (20, 35, 45) auf der Basis des gespeicherten Inhalts des zweiten Speichermittels die Ausgabe gestattet, wenn das Beurteilungsmittel (18, 36, 46) beurteilt hat, daß das Zielbild das verbotene Bild enthält.

7. Bildverarbeitungsvorrichtung nach Anspruch 6, wobei das Steuermittel die Ausgabe gestattet, wenn festgestellt wurde, daß der eingegebene Berechtigungscode ein rechtmäßiger Code ist, der dem verbotenen Bild entspricht, das in dem Zielbild enthalten ist.

8. Bildverarbeitungsvorrichtung nach Anspruch 6 oder 7, wobei das verbotene Bild eine Markierung ist, die ein vertrauliches Dokument kennzeichnet.

9. Bildverarbeitungsvorrichtung nach einem der Ansprüche 6 bis 8, wobei der Verbotsaufhebungscode und der Berechtigungscode hinsichtlich eines identischen verbotenen Bildes identisch sind.

10. Bildverarbeitungsvorrichtung nach einem der Ansprüche 6 bis 9, wobei das erste Eingabemittel und das zweite Eingabemittel gleich sind.

11. Bildverarbeitungsvorrichtung nach Anspruch 1, wobei die Vorrichtung ein Kopierer ist und das Ausgabemittel ein Kopiermittel (23) zum Kopieren des Zielbildes auf Papier ist.

12. Bildverarbeitungsvorrichtung nach Anspruch 1, wobei die Vorrichtung ein Faksimilegerät ist und das Ausgabemittel (23, 34, 44) ein Mittel (34) zum Übertragen von Bilddaten, die das Zielbild darstellen, ist.

13. Bildverarbeitungsvorrichtung nach Anspruch 1, wobei die Vorrichtung ein Bildleser ist und das Ausgabemittel ein Mittel (44) zum Speichern oder Senden von Bilddaten, die das Zielbild darstellen, ist.

## Revendications

1. Appareil de traitement d'image comprenant :
un premier moyen de mémoire (20, 35, 45) dans lequel des données d'image interdite représentant une image interdite ont été mémorisées par avance,
un moyen de génération de données d'image cible (11, 31, 41) destiné à lire une image cible et à générer des données d'image cible représentant l'image cible,
un moyen de sortie (23, 34, 44) destiné à fournir en sortie les données d'image cible générées par ledit moyen de génération,
un moyen d'évaluation (18, 36, 46) destiné à évaluer si l'image cible lue par ledit moyen de génération (11, 31, 41) contient l'image interdite,
un premier moyen de saisie (21, 22, 38, 48) destiné à entrer un code de suppression d'interdiction représentant l'autorisation pour supprimer l'interdiction de fonctionnement,
un moyen (20, 35, 45) destiné à compter un nombre de fois consécutives que ledit moyen d'évaluation (18, 36, 46) évalue que l'image cible contient l'image interdite,
un moyen de commande (20, 35, 45) destiné à réaliser la commande d'une manière telle qu'une sortie anormale est réalisée jusqu'à ce que le nombre de fois comptées par ledit moyen de comptage atteigne un nombre prédéterminé de fois, et lorsque le nombre prédéterminé de fois est atteint, interdire le fonctionnement d'au moins l'un desdits moyens de génération (11, 31, 41) et desdits moyens de sortie et accepter l'entrée du code de suppression d'interdiction provenant dudit premier moyen de saisie (21, 22, 38, 48), et
un moyen (20, 35, 45) de vérification en vue de déterminer si le code de suppression d'interdiction entré est un code légitime correspondant à l'image interdite contenue dans l'image cible,
dans lequel ledit moyen de commande (20, 35, 45) supprime l'interdiction de fonctionnement lorsqu'il a été déterminé que le code de suppression d'interdiction entré est légitime.

2. Appareil de traitement d'image selon la revendication 1, dans lequel ledit moyen de commande (20, 35, 45) réalise une commande d'une manière telle qu'une sortie normale est restaurée lorsque ledit moyen d'évaluation (18, 36, 46) évalue que l'image cible ne contient pas l'image interdite à l'instant où le nombre de fois comptées par ledit moyen de comptage (20, 35, 45) atteint le nombre prédéterminé de fois.

3. Appareil de traitement d'image selon la revendication 1, dans lequel ledit moyen de commande (20, 35, 45) réalise une commande d'une manière telle qu'une sortie normale est restaurée lorsque, après que ledit moyen d'évaluation (18, 36, 46) évalue que l'image cible contient l'image interdite, il est évalué que l'image cible lue par ledit moyen de génération (11, 31, 41) ne contient pas l'image interdite et, en outre, il est évalué que l'image cible lue par ledit moyen de génération est différente d'une image cible précédente évaluée comme contenant l'image interdite.

4. Appareil de traitement d'image selon la revendication 1, dans lequel ledit moyen de comptage (20, 35, 45) détecte que ledit moyen d'évaluation (18, 36, 46) a évalué consécutivement, ledit nombre prédéterminé de fois, qu'une image cible identique contient l'image interdite.

5. Appareil de traitement d'image selon l'une quelconque des revendications 1 à 4, dans lequel ladite image interdite est une image qui fait partie d'un billet de banque ou en est la totalité.

6. Appareil de traitement d'image selon la revendication 1, comprenant en outre :
un second moyen de saisie (21, 22, 38, 48) destiné à entrer un code d'autorisation de sortie qui rend possible la sortie de l'image interdite, et
un second moyen de mémoire (20, 35, 45) destiné à déterminer si le code d'autorisation de sortie entré par ledit second moyen de saisie est légitime et, si le code est légitime, destiné à mémoriser ce fait ou le code d'autorisation de sortie entré,
ledit moyen de commande (20, 35, 45) permettant une sortie, sur la base du contenu mémorisé dudit second moyen de mémoire, lorsque ledit moyen d'évaluation (18, 36, 46) a évalué que l'image cible contient l'image interdite.

7. Appareil de traitement d'image selon la revendication 6, dans lequel ledit moyen de commande permet la sortie lorsqu'il a été déterminé que le code d'autorisation entré est un code légitime correspondant à l'image interdite contenue dans l'image cible.

8. Appareil de traitement d'image selon la revendication 6 ou 7, dans lequel ladite image interdite est une marque indicative d'un document confidentiel.

9. Appareil de traitement d'image selon l'une quelconque des revendications 6 à 8, dans lequel ledit code de suppression d'interdiction et ledit code d'autorisation sont identiques en ce qui concerne une image interdite identique.

10. Appareil de traitement d'image selon l'une quelconque des revendications 6 à 9, dans lequel ledit premier moyen de saisie et ledit second moyen de saisie sont les mêmes.

11. Appareil de traitement d'image selon la revendication 1, dans lequel ledit appareil est un copieur et ledit moyen de sortie est un moyen de copie (23) destiné à copier l'image cible sur du papier.

12. Appareil de traitement d'image selon la revendication 1, dans lequel ledit appareil est une machine de fac-similé et ledit moyen de sortie (23, 34, 44) est un moyen (34) destiné à transmettre des données d'image représentant l'image cible.

13. Appareil de traitement d'image selon la revendication 1, dans lequel ledit appareil est un dispositif de lecture d'image et ledit moyen de sortie est un moyen (44) destiné à mémoriser ou à émettre des données d'image représentant l'image cible.
